# EUROPEAN PATENT APPLICATION

(11) **EP 3 051 472 A1**
(43) Date of publication of application: **03.08.2016**
(21) Application number: 16305094.1
(22) Date of filing: 29.01.2016
(51) Int. Cl.: G06Q 10/08

(54) **POLYGON FABRIC GENERATION OF POSTAL MAP**

(30) Priority: 30.01.2015 US 201514610712
(71) Applicant: NEOPOST TECHNOLOGIES, 92220 Bagneux (FR)
(72) Inventor: POWELL, Peter O., Woodbridge, Ontario L4H2R4 (CA)
(74) Representative: David, Alain

(57) **Abstract**

A postal code map and related data constructed of polygons representing multiple-digit postal codes and defined by attribution information and/or other spatial features thereby providing more granular and precise entities to optimize activities such as trade area analysis and visualization. The polygons are created and illustrated by generating Voronoi tessellation based on the location of high precision address points and/or interpolated address points, multiple-digit postal codes of each and, for further refinement, attribution information and/or other spatial features such as streets, roads and highways; water borders and boundaries; rail lines; and park, city, county and other municipal, commercial and residential boundaries or barriers to further enclose, restrict and/or define the resulting polygon limits of the visual map.

## Description

### BACKGROUND

A number of postal mapping techniques currently exist for various uses and applications across a range of countries. For example, in the United States, there are postal mapping techniques ranging from simple ZIP code maps to more detailed usage and data maps. The accuracy and applicability of these maps can vary depending on formation parameters, and associated rules and regulations of the postal authorities for a given area. Accuracy and applicability of such maps is important, since confusion may have significant implications. For example, mail volume is one factor used by the U.S. Census Bureau to estimate population changes. In this case, the U.S. Census Bureau calculates approximate boundaries of ZIP codes areas using ZIP Code Tabulation Areas (ZCTAs), and census data is provided for the tabulated areas. Still another common use of postal mapping is in marketing or more specifically, direct mail marketing campaigns using postal mapping techniques such as Voronoi diagraming.

Voronoi diagraming is a mathematical method of partitioning a plane into regions based on distances between points or other point-dependent variables, within a subset of the plane. Regions or cells are created including addresses that are, for example, closest to one another, and presented as a map of adjacent cells.

However, the creation of such cells is not well suited for postal code representation, since such cells can create undesirable boundaries. For example, such boundaries may unsuitably span geographical or logistical areas and become poorly suited for marketing analysis and visualization. Such boundaries may also cover areas where no postal code boundaries should exist (i.e. lakes, rivers, oceans, and so forth). Further, it is not desirable to have postal code boundaries where no addresses points support the given postal code.

### BRIEF SUMMARY

According to an embodiment of the disclosed subject matter, a system and method is provided to create polygons representing multiple-digit postal codes (for example, six-digit postal codes, and wherein digits can include letters, numbers, or combinations thereof) and defined by attribution information and/or other spatial features thereby providing more granular and precise entities to optimize activities such as trade area analysis and visualization. The results can be stored and provided as analysis data or illustrated using, for example, a visual map.

According to an embodiment of the disclosed subject matter, a system and method is provided to determine high precision address points and/or interpolated address points and six-digit postal codes of each.

According to an embodiment of the disclosed subject matter, a system and method is provided to then create Voronoi cells or polygons including all or substantially all of the addresses of each respective postal code.

According to an embodiment of the disclosed subject matter, a system and method is provided to determine attribution information and/or other spatial features such as streets, roads and highways; water borders or boundaries; rail lines; and park, city, county and other municipal, commercial or residential boundaries or barriers to enclose or help define the Voronoi cells or polygons, and expand, contract and/or divide the Voronoi cells or polygons to fit within such attribution information and/or other spatial features.

According to an embodiment of the disclosed subject matter, a system and method is provided to combine Voronoi cells or polygons representing the same postal code after feature adjustments by the attribution information and/or other spatial features, if they have a shared border.

According to an embodiment of the disclosed subject matter, a system and method is provided to store and provide the Voronoi cells or polygons as analysis data or as an illustration, such as a visual map.

According to an embodiment of the disclosed subject matter, a system and method is provided to weight one or more of the values to affect Voronoi cell or polygon formation.

According to an embodiment of the disclosed subject matter, means is provided for polygon formation using six-digit postal codes and defined by attribution information and/or other spatial features, providing more granular and precise entities to optimize activities such as trade area analysis and visualization. The polygons are generated by Voronoi tessellation based on the location of high precision address points and/or interpolated address points, six-digit postal codes of each and, for further refinement, attribution information and/or other spatial features such as streets, roads and highways; water borders or boundaries; rail lines; and park, city, county and other municipal, commercial or residential boundaries or barriers to further enclose, restrict and/or define the resulting polygon limits.

According to another embodiment of the disclosed subject matter, a system and method is provided for polygon formation using six-digit postal codes and defined by attribution information and/or other spatial features, providing more granular and precise entities to optimize activities such as trade area analysis and visualization. The polygons are generated by Voronoi tessellation based on the location of high precision address points and/or interpolated address points, six-digit postal codes of each and, for further refinement, attribution information and/or other spatial features such as streets, roads and highways; water borders or boundaries; rail lines; and park, city, county and other municipal, commercial or residential boundaries or barriers to further enclose, restrict and/or define the resulting polygon limits.

Additional features, advantages, and embodiments of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.
Fig. 1 is a Voronoi postal code map illustrating the consideration of both location, six-digit postal codes of each, and attribution information and/or other spatial features, according to an embodiment of the disclosed subject matter.
Fig. 2 is a flow chart illustrating a process for preparing the Voronoi postal code map of Fig. 1 according to an embodiment of the disclosed subject matter.
Figs. 3A to 3C, illustrate Voronoi cell formation and resulting postal code map according to an embodiment of the disclosed subject matter.
Fig. 4 is a Voronoi address map without the consideration of attribution information and/or other spatial features.
Fig. 5 is a Voronoi postal code map without the consideration attribution information and/or other spatial features.

### DETAILED DESCRIPTION

The present invention forms polygons using addresses and multiple-digit postal codes (for example, six-digit postal codes, but not limited thereto, and wherein digits can include letters, numbers, or combinations thereof) of each in both urban and rural regions, wherein such a polygon fabric representing six-digit postal codes provides more granular and precise entities to optimize activities such as trade area analysis and visualization. The present invention creates such polygons by generating Voronoi tessellation based on the location of high precision address points and/or interpolated address points, six-digit postal codes of each and, for further refinement, uses attribution information and/or other spatial features such as streets, roads and highways; water borders or boundaries; rail lines; and park, city, county and other municipal, commercial or residential boundaries or barriers to further enclose, restrict and/or define the resulting polygon limits.

To do so, the present invention implements a Voronoi diagraming method, which is a mathematical method of partitioning a plane into regions based on distances between points or other variables, within a subset of the plane. In this case, the set of points can include, but is not limited to, high precision address points and/or interpolated address points and for each such address point, a corresponding region is created including all or substantially all of the addresses of each respective postal code. These regions are called Voronoi cells.

In one implementation presented for illustration, a set of addresses {*p*₁, ... , *pₙ*} are noted in a postal area, wherein each address *pₖ* is simply a point and its corresponding Voronoi cell *Rₖ* consists of all or substantially all of the addresses of each respective postal code and in doing so, each cell is formed as a polygon. However, with postal codes, it is possible for one address to have multiple postal codes. For example, Canada Post does not define postal areas but assigns postal codes to addresses and, in some cases, can assign multiple postal codes to one address. Any number of suitable algorithms can be used for forming such polygons. However, the creation of such polygons may create undesirable boundaries. For example, such boundaries may unsuitably span geographical or logistical areas and become poorly suited for trade area analysis and visualization. Such boundaries may also cover areas where no postal code boundaries should exist (i.e. lakes, rivers, oceans, and so forth). Further, it is not desirable to have postal code boundaries where no addresses points support the given postal code.

Accordingly, the present invention includes the location and six-digit postal code information noted above and further, attribution information and/or other spatial features of the address points and/or six-digit postal codes. That is, the invention considers attribution information and/or other spatial features such as, but not limited to, streets, roads and highways; water borders or boundaries; rail lines; and park, city, county and other municipal, commercial or residential boundaries or barriers, to further enclose, restrict and define the resulting polygons that optimize uses such as trade area analysis and visualization. The invention can further weight any one or more of the address points, six-digit postal codes, and attribution information and/or other spatial features where desirable to do so, to further enclose, restrict and define the resulting polygons.

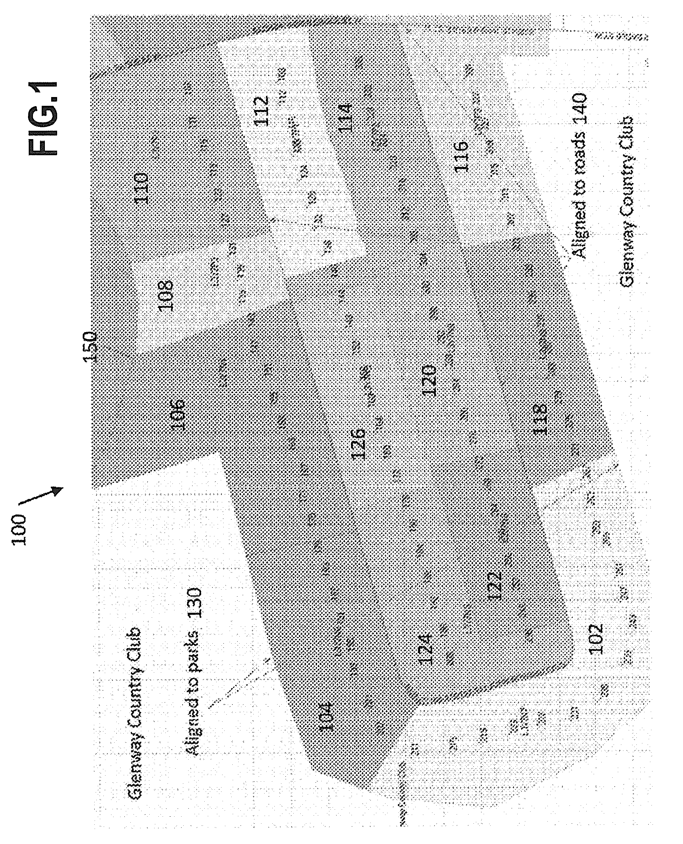

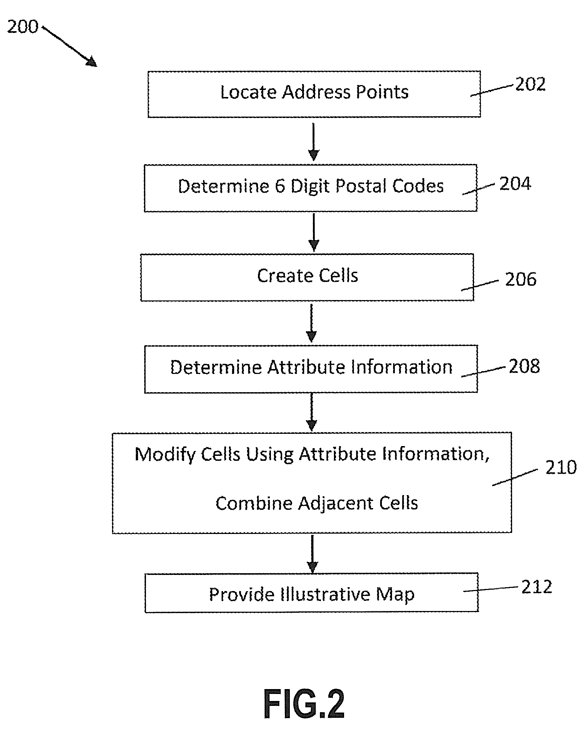

Fig. 1 is a Voronoi postal code map 100 illustrating the consideration of both location, six-digit postal codes of each, and attribution information and/or other spatial features, according to an embodiment of the disclosed subject matter, and Fig. 2 is a flow chart illustrating a process 200 for preparing the Voronoi postal code map of Fig. 1 according to an embodiment of the disclosed subject matter.

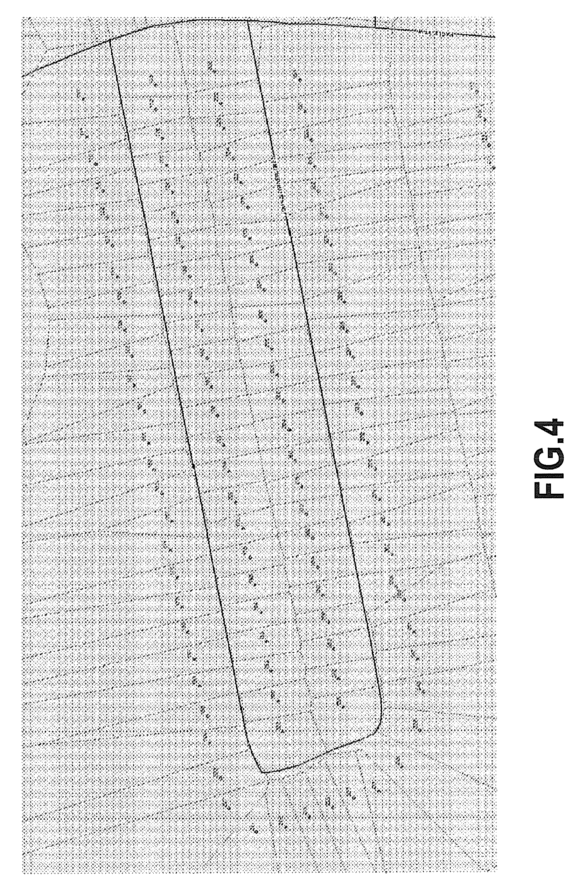

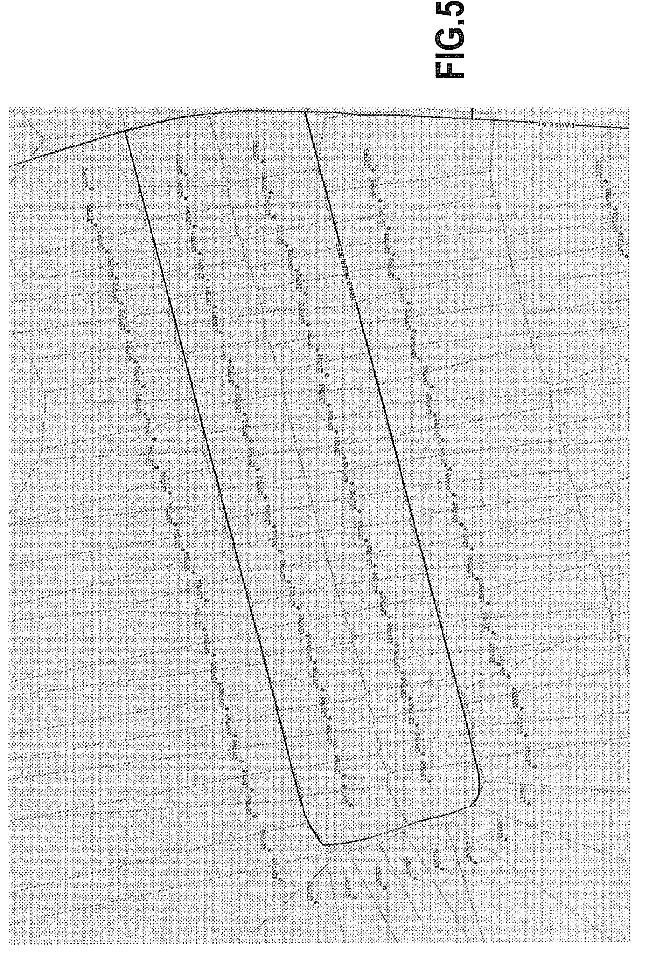

The Voronoi postal code map 100 of Fig. 1 is a visual map created using polygons 102-126 generated by Voronoi tessellation based on the location of high precision address points and/or interpolated address points, six-digit postal codes of each and, for further refinement, attribution information and/or other spatial features such as streets, roads and highways; water borders or boundaries; rail lines; and park, city, county and other municipal, commercial or residential boundaries or barriers to further enclose, restrict and/or define the resulting polygon limits of the visual map. In this case, the attribution information includes park boundaries 130, road boundaries 140, and water boundaries 150. In contrast, a Voronoi address map of the same area without spatial refinement (e.g., without consideration of attribution information and/or spatial features) is shown in Fig. 4, and a Voronoi postal code map of the same area without spatial refinement (e.g., without consideration of attribution information and/or spatial features) is shown in Fig. 5. The maps of Figs. 4 and 5 are based upon simply grouped addresses and related postal codes, and Voronoi cells based thereon. However, in the maps of Figs. 4 and 5, the polygon cells of the maps unsuitably span geographical or logistical areas and become poorly suited for trade area analysis and visualization.

In the Voronoi postal code map 100 of Fig. 1, the initially formed polygons or cells of the postal code areas, including addresses therein, are first restricted by attribution information and/or other spatial features such as streets, roads and highways; water borders or boundaries; rail lines; and park, city, county and other municipal, commercial or residential boundaries or barriers. The system and method then combines Voronoi cells or polygons representing the same postal code after the feature adjustments by the attribution information and/or other spatial features, if they have a shared border. The resulting polygons can be stored and provided as analysis data or illustrated using, for example, the visual Voronoi postal code map 100.

Further, the Voronoi postal code map 100 of Fig. 1 can identify related polygons of polygons 102-126 using colors. For example, each polygon can be illustrated with a color, and same or similar colors can be used to quickly and accurately identify related polygons. Such relationships can include, but are not limited to, polygons having the same six-digit postal code as in the case of polygons 108 and 116, in the case of polygons 110 and 114, and so forth.

Fig. 2 is a flow chart illustrating a process 200 for preparing the Voronoi polygons of Fig. 1. At a first step 202, high precision address points and/or interpolated address points are determined and six-digit postal codes of each are identified. The address points are determined using any suitable address information, such as a street address, which can be obtained in real time from a number of databases that can be maintained by the invention or that can be accessed by the invention.

A six-digit postal code of each is identified at step 204, and Voronoi cells are created including all or substantially all of the addresses of each respective postal code at step 206. Attribution information and/or other spatial features such as streets, roads and highways; water borders or boundaries; rail lines; and park, city, county and other municipal, commercial or residential boundaries or barriers, are determined at step 208, and the Voronoi cells of step 206 are expanded, contracted and/or divided to fit within such attribution information at step 210. The attribution information and/or other spatial features can also be obtained in real time from a number of databases that can be maintained by the invention or that can be accessed by the invention.

The system and method also combines Voronoi cells or polygons representing the same postal code after the feature adjustments by the attribution information and/or other spatial features, if they have a shared border, at step 210. The resulting polygons can be stored and provided as analysis data or illustrated using, for example, the visual Voronoi postal code map 100 at step 212.

An additional operation can be performed at steps 206 and 210 wherein a user can weight any one or more of the address points, six-digit postal codes, and attribution information where desirable to do so, to further define and affect Voronoi cell or polygon formation and the resulting map.

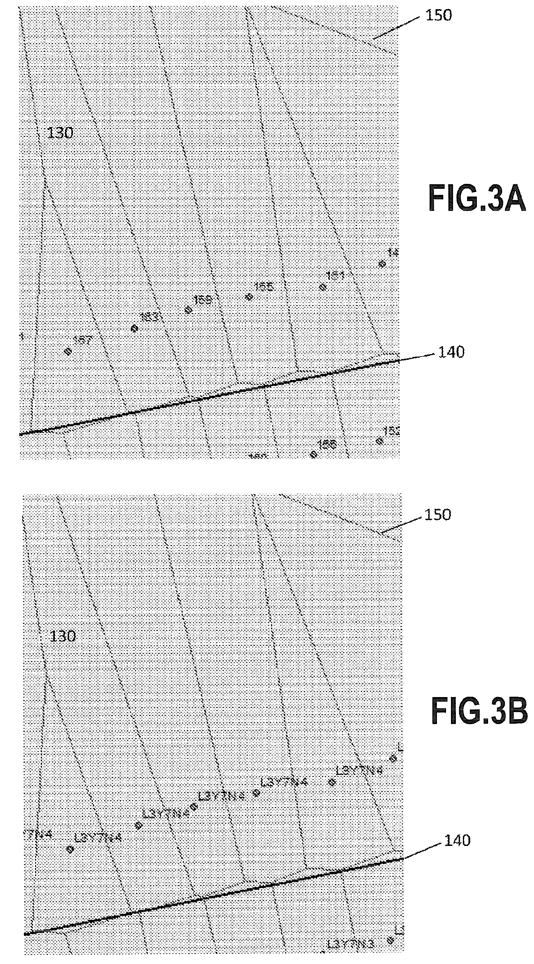

Figs. 3A to 3C illustrate a portion of Voronoi cell or polygon formation and resulting postal code map resulting from the process of Fig. 2, and corresponding to the same map portions of Figs. 1, 4 and 5. First, high precision address points and/or interpolated address points are determined as shown in the address map portion of Fig. 3A. In the address map portion of Fig. 3A, address points 151, 155, 159, 163 and 167 of Fig. 4 are shown enlarged for detailed illustration.

Six-digit postal codes of each are identified as shown in the postal code map portion of Fig. 3B. In the postal code map portion of Fig. 3B, single six-digit postal code L3Y7N4 of Fig. 5 is shown enlarged for detailed illustration and corresponds to the address points 151, 155, 159, 163 and 167.

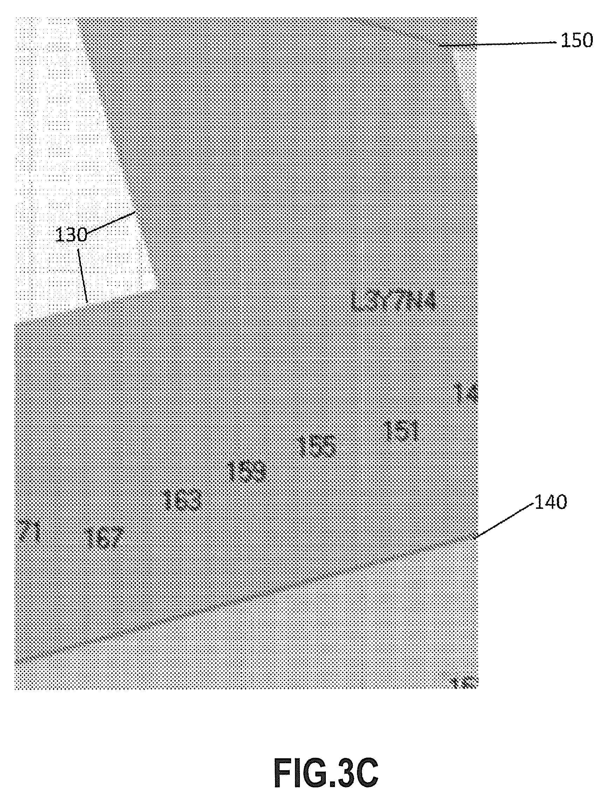

The resulting Voronoi cells or polygons are then created including all or substantially all of the addresses of each respective postal code, in this case, L3Y7N4. Attribution information and/or other spatial features such as streets, roads and highways; water borders or boundaries; rail lines; and park, city, county and other municipal, commercial or residential boundaries or barriers, are considered, and the Voronoi cells or polygons are expanded, contracted and/or divided to fit within such attribution information and/or other spatial features. Further, Voronoi cells or polygons representing the same postal code are combine after the feature adjustments by the attribution information and/or other spatial features, if they have a shared border as shown in the postal code map portion of Fig. 3C. In the postal code map portion of Fig. 3C, the attribution information and/or other spatial features include an enlarged view of the park boundary 130, road boundary 140 and water boundary 150 for detailed illustration of the effect on the resulting polygons and map as shown in Fig. 1.

Accordingly, the present invention results in the Voronoi cells or polygons, and postal code map of Fig. 1, wherein the consideration of attribution information and/or other spatial features such as streets, roads and highways; water borders or boundaries; rail lines; and park, city, county and other municipal, commercial or residential boundaries or barriers, further enclose, restrict and define the polygons resulting in data and maps that optimize uses such as trade area analysis and visualization. In contrast, a Voronoi address map of the same area without spatial refinement (e.g., without consideration of attribution information and/or spatial features) is shown in Fig. 4, and a Voronoi postal code map of the same area without spatial refinement (e.g., without consideration of attribution information and/or spatial features) is shown in Fig. 5. The maps of Figs. 4 and 5 are simply based upon grouped addresses and related postal codes, and Voronoi cells based thereon. However, in the maps of Figs. 4 and 5, the polygon cells of the maps unsuitably span geographical or logistical areas and become poorly suited for trade area analysis and visualization.

Various embodiments of the presently disclosed subject matter may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits.

In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Embodiments may be implemented using hardware that may include a processor, such as a general purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

## Claims

1. A method to provide postal data using a polygon fabric representing multiple-digit postal codes, comprising:
determining addresses of a postal area and multiple-digit postal codes of each;
creating Voronoi cells of the postal area including addresses of each respective multiple-digit postal code;
modifying a boundary of a Voronoi cell based upon spatial feature information of the postal area;
combining Voronoi cells if they have a shared border; and
providing postal data comprising a plurality of Voronoi cells.

2. The method of claim 1, wherein spatial feature information comprises one or more of streets, roads and highways; water borders and boundaries; rail lines; and park, city, county and other municipal, commercial and residential boundaries and barriers of the postal area.

3. The method of claim 2, wherein the boundary of the Voronoi cell is modified to expand, contract or divide to conform to the spatial feature information of the postal area.

4. The method of claim 2, wherein an element of the spatial feature information is weighted relative to other spatial feature information to affect the Voronoi cell modification.

5. A postal map of a polygon fabric representing multiple-digit postal codes, comprising:
a plurality of Voronoi cells including addresses of a postal area and multiple-digit postal codes of each, wherein a boundary of a Voronoi cell is modified based upon spatial feature information of the postal area, and wherein Voronoi cells are combined into a single cell if they have a shared border.

6. The postal map of claim 5, wherein spatial feature information comprises one or more of streets, roads and highways; water borders and boundaries; rail lines; and park, city, county and other municipal, commercial and residential boundaries and barriers of the postal area.

7. The postal map of claim 6, wherein the boundary of the Voronoi cell is modified to expand, contract or divide to conform to the attribution information of the postal area.

8. The postal map of claim 6, wherein an element of the spatial feature information is weighted relative to other attribution information to affect the Voronoi cell modification.

9. A method to provide a postal map, comprising:
creating Voronoi cells of a postal area including addresses of the postal area;
modifying a boundary of a Voronoi cell based upon spatial feature information of the postal area;
combining Voronoi cells if they have a shared border; and
providing a postal map comprising a plurality of Voronoi cells.

10. A method of claim 9, wherein the Voronoi cells of a postal area include addresses of each respective postal code of the postal area.

11. The method of claim 9 or claim 10, wherein spatial feature information comprises one or more of streets, roads and highways; water borders and boundaries; rail lines; and park, city, county and other municipal, commercial and residential boundaries and barriers of the postal area.

12. The method of claim 10, wherein the boundary of the Voronoi cell is modified to expand, contract or divide to conform to the attribution information of the postal area.
